# FASCICULE DE BREVET EUROPEEN

(11) **EP 1 360 749 B1**
(45) Date de publication et mention de la délivrance du brevet: **29.06.2005**
(21) Numéro de dépôt: 02704805.7
(22) Date de dépôt: 12.02.2002
(51) Int. Cl.: H02G 3/04, H02G 3/06

(54) **ECLISSE DE RACCORDEMENT POUR CHEMINS DE CABLES EN FILS, CHEMIN DE CABLES EN FILS EQUIPE D'UNE TELLE ECLISSE ET ENSEMBLE DE CHEMINS DE CABLES EN FILS RACCORDES PAR UNE TELLE ECLISSE**
VERBINDUNGSLASCHE FÜR KABELRINNEN AUS DRAHTGITTER , DAMIT AUSGERUSTETEN UND VERBONDEN KABELRINNEN
CONNECTING BUTT STRAPS FOR WIRE CABLE TRAYS, WIRE CABLE TRAYS EQUIPPED WITH SAME AND WIRE CABLE TRAY ASSEMBLIES CONNECTED WITH SAME

(30) Priorité: 16.02.2001 FR 0102163
(43) Date de publication de la demande: 12.11.2003
(73) Titulaire: I.C.M. Group, 21500 Montbard (FR)
(72) Inventeur: DECIRY, James, F-60200 Compiègne (FR)
(74) Mandataire: Santarelli
(86) Numéro de dépôt international: PCT/FR2002/000525
(87) Numéro de publication internationale: WO 2002/067398

(56) Documents cités:
- EP-A- 0 905 843
- DE-U- 7 921 266
- FR-A- 2 208 219

## Description

La présente invention concerne d'une manière générale les chemins de câbles en fils.

Ainsi qu'on le sait, ces chemins de câbles en fils comportent, sous forme maillée, des fils de deux types différents, à savoir, d'une part, des fils longitudinaux, communément appelés fils de chaîne, qui courent, longitudinalement, de manière rectiligne ou quasi rectiligne, sur toute leur longueur, et, d'autre part, établis transversalement de place en place le long de ces fils longitudinaux, en étant dûment assujettis à ceux-ci, des fils transversaux conformés en U, communément appelés fils de trame, l'ensemble formant globalement trois panneaux, en pratique plans ou sensiblement plans, à savoir un panneau de fond et deux panneaux latéraux.

Ces chemins de câbles en fils sont couramment utilisés pour assurer, à la manière de goulotte, le soutien, le logement et la protection de câbles électriques ou similaires.

Par câbles électriques, on entend en effet ici, et dans ce qui suit, non seulement les câbles propres au transport et à la distribution de l'énergie électrique, mais aussi les câbles et fibres propres à une transmission d'information de manière électrique, optique ou autre.

A l'égard de tels câbles électriques, les chemins de câbles en fils ont de nombreux avantages qui les font apprécier des installateurs électriciens, et, notamment, des avantages de facilité de pose, et donc d'économie, de flexibilité, les câbles électriques pouvant en être sortis par l'une quelconque de leurs mailles, de transparence, et, donc, de repérage des câbles électriques, de ventilation, de propreté, de sécurité, tant pour les câbles électriques que pour les utilisateurs, et de performances.

La présente invention a pour but de proposer une éclisse de raccordement qui permette de raccorder très rapidement deux tels chemins de câbles en fils, sans mise en oeuvre de vis ou boulons, ladite éclisse n'étant pas agressive, pouvant être pré-montée sur l'un des chemins de câbles, et même récupérée après utilisation.

Le but de l'invention est atteint par l'éclisse de raccordement présentant les caractéristiques énoncées à la revendication 1.

Avantageusement, l'éclisse de raccordement comprend un corps en forme de U ayant deux ailes et une âme, les moyens de clipsage étant définis entre, d'une part, les bords latéraux d'un retour dit de clipsage prolongeant l'âme en s'étendant globalement perpendiculairement à celle-ci et, d'autre part, chacune desdites ailes ; l'âme du corps en U comporte un retour de clipsage à chacune de ses extrémités ; l'une des ailes du corps en U présente à son extrémité proche d'un retour de clipsage une fente définissant une languette destinée à être par pliage rabattue vers l'intérieur du U du corps en U.

De préférence, l'une des ailes du U du corps en U se prolonge selon un retour dit de verrouillage portant une patte dite dé verrouillage adaptée à être pliée sur un fil de chaîne pour verrouiller l'éclisse en positon de raccordement ; la patte de verrouillage est portée par le retour de verrouillage au droit du bord d'une rainure ménagée dans ledit retour de verrouillage ; le retour de verrouillage s'étend globalement parallèlement à l'âme du U du corps en U.

Avantageusement, la rainure s'étend parallèlement au retour de clipsage.

De préférence, l'éclisse présente une entaille ménagée dans l'âme et les ailes du corps en U en prolongement de la rainure.

Avantageusement; lesdits bords latéraux du retour présentent, au voisinage de leur extrémité, une proéminence précédée d'une entrée en biseau, ladite proéminence définissant avec les ailes du corps en forme de U un passage dont la largeur est inférieure au diamètre des fils de trame.

L'invention a également pour objet un ensemble de deux chemins de câbles en fils raccordés par au moins une éclisse de raccordement telle que ci-dessus ; l'éclisse est clipsée de part et d'autre des retours de clipsage par les ailes des fils de trame placés en bout et se faisant face des deux chemins de câbles, les languettes étant rabattues sur lesdites ailes, un fil de chaîne de l'un desdits chemins de câbles s'étendant dans la rainure et dans l'entaille, la patte de verrouillage étant rabattue sur ledit fil de chaîne.

Un autre objet de l'invention est un chemin de câbles en fils équipé d'au moins une éclisse de raccordement telle que ci-dessus, ladite éclisse étant montée à pivotement autour d'une aile d'un fil de trame en bout et s'étendant à l'intérieur du chemin de câbles le long de son panneau latéral défini notamment par ladite aile.

Pour mieux faire comprendre l'objet de l'invention, on va en décrire maintenant, à titre d'exemple, purement illustratif et non limitatif, des modes de réalisation représentés sur les dessins annexés.

Sur ces dessins :
- la figure 1 est une vue en plan d'une éclisse de raccordement selon l'invention ;
- les figures 2 à 5 sont des vues selon les flèches II à V, respectivement, de la figure 1 ;
- la figure 6 est une vue selon la flèche VI de la figure 5 ;
- la figure 7 est une vue en perspective de l'éclisse des figures 1 à 6 ;
- la figure 8 est une vue analogue à la figure 7, l'éclisse étant vue sous un autre angle ;
- la figure 9 montre la présentation d'éclisses avant mise en place sur un premier chemin de câbles ;
- la figure 10 montre la mise en place des éclisses sur le premier chemin de câbles ;
- les figures 11 et 12 illustrent le verrouillage de la mise en place des éclisses sur le premier chemin de câbles ;
- la figure 13 illustre la position des éclisses pré-montées sur le premier chemin de câbles pouvant être livré en cet état ;
- les figures 14 et 15 illustrent deux étapes de présentation du second chemin de câbles à raccorder au premier ;
- les figures 16 et 17 illustrent la mise en place et le verrouillage des éclisses sur le second chemin de câbles, la figure 17 étant une vue en coupe selon XVII-XVII de la figure 16.

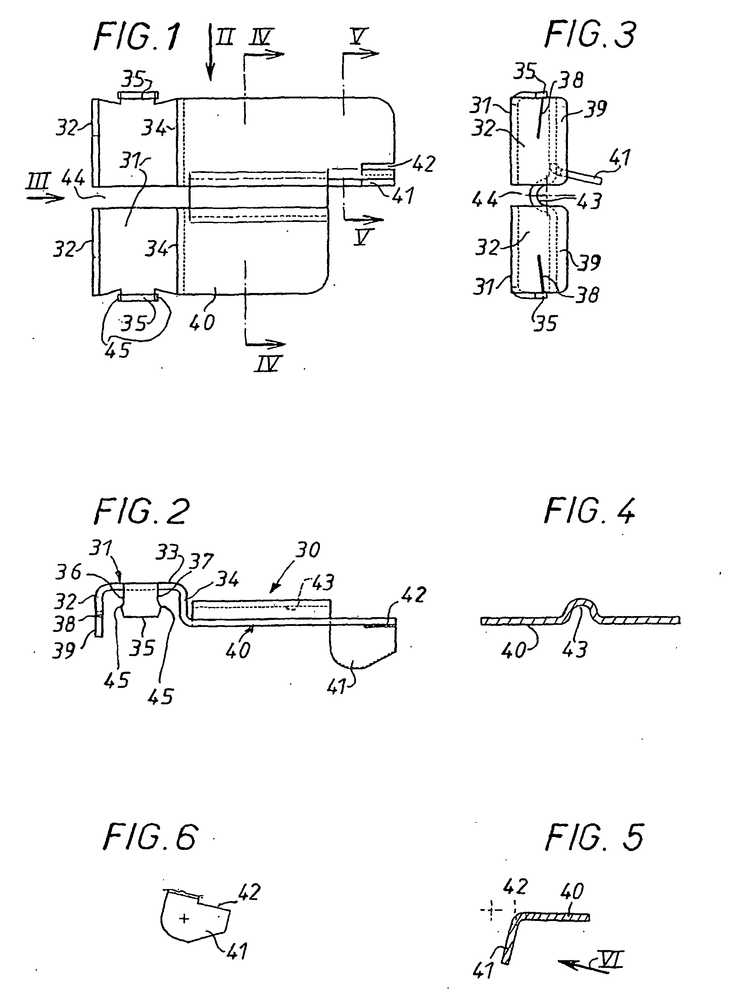

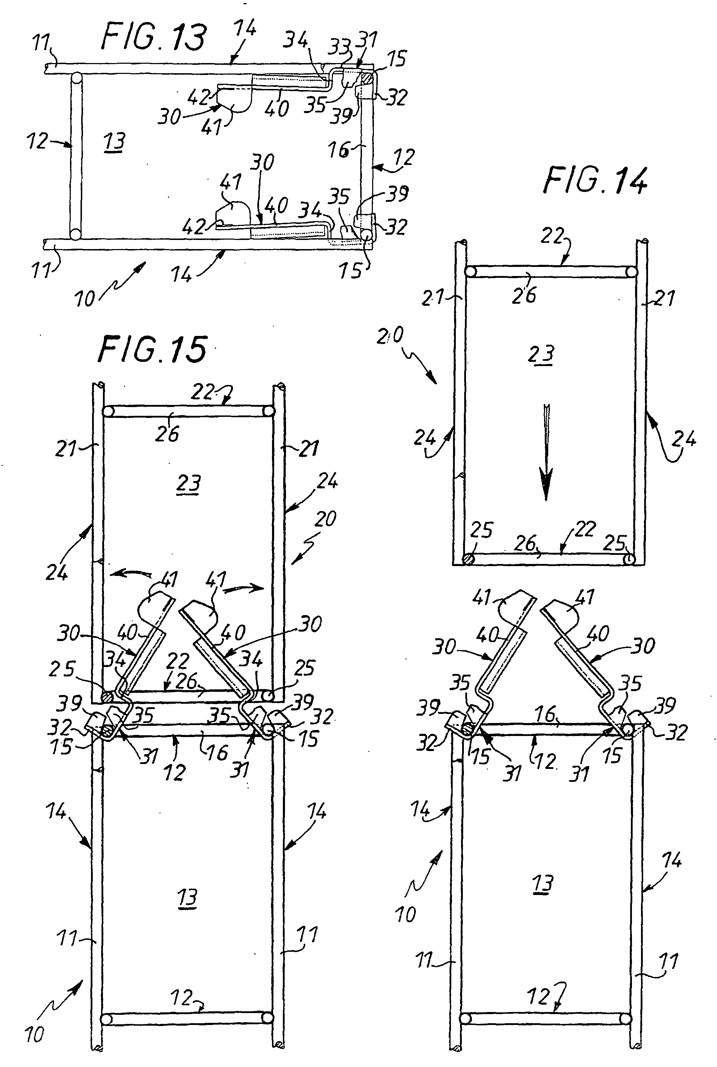

En se reportant aux figures 1 à 8, on voit une éclisse 30 de raccordement destinée à raccorder l'un à la suite de l'autre deux chemins de câbles 10, 20 en fils, figure 14.

Ces chemins de câbles 10, 20 en fils comportent, de manière connue en soi, sous forme maillée, des fils de deux types différents, à savoir, s'agissant du chemin de câbles 10, des fils longitudinaux 11 qui courent longitudinalement de manière rectiligne ou sensiblement rectiligne sur toute sa longueur et, d'autre part, établis transversalement de place en place, suivant un pas régulier, le long de ces fils longitudinaux 11, en étant dûment assujettis à ceux-ci, des fils transversaux 12 conformés en U, l'ensemble formant globalement, à la manière d'une goulotte, trois panneaux 13, 14, à savoir un panneau de fond 13 et deux panneaux latéraux 14.

En pratique, les fils 11, 12 sont des fils métalliques, plus précisément en acier, et à leur croisement ils sont assujettis les uns aux autres par soudage.

Par construction, les fils 11, 12 se croisent à des niveaux différents ; ici, les fils longitudinaux 11 s'étendent à l'extérieur des fils transversaux 12.

Dans la forme de réalisation représentée, tous les fils 11, 12 sont des fils ronds, c'est-à-dire que leur section transversale est circulaire.

Ici, tel que représenté, le diamètre de la section transversale est la même pour tous les fils, mais il n'en est pas nécessairement toujours ainsi.

Dans la forme de réalisation représentée, le panneau de fond 13 n'a pas de fil longitudinal 11 et chacun des panneaux latéraux ne comporte que deux fils longitudinaux 11, à savoir un fil longitudinal 11 intermédiaire, qui intervient sensiblement à mi-hauteur et un fil longitudinal 11 de rive.

Mais bien entendu ce nombre de fils longitudinaux 11 peut être différent ; de même, le panneau de fond 13 peut comporter des fils longitudinaux 11 et leur nombre peut être quelconque.

Le chemin de câbles 20 est identique au chemin de câbles 10 et ses éléments constitutifs portent les mêmes références que ceux du chemin de câbles 10 augmentées de 10.

Les fils transversaux 12, 22 étant en forme de U, on a désigné par 15, 25 leurs ailes et 16, 26 leur âme, respectivement.

Comme on le sait, les fils longitudinaux 11, 21 sont communément appelés fils de chaîne, et les fils transversaux 12, 22 fils de trame.

Pour raccorder l'un à la suite de l'autre les chemins de câbles 10, 20, ceux-ci sont préparés en sorte que, à leur extrémité par laquelle ils vont être aboutés, les fils de chaîne sont coupés au droit du fil de trame d'extrémité, lequel se trouve alors en bout du chemin de câbles correspondant, comme cela est visible sur les figures.

L'éclisse de raccordement 30 comporte des moyens de clipsage adaptés à clipser ladite éclisse 30 sur ces fils de trame 12 et 22 placés en bout des chemins de câbles 10 et 20.

L'éclisse de raccordement 30 comprend un corps 31 en forme de U ayant deux ailes 32, 34 et une âme 33.

L'âme 33 est prolongée par un retour 35 dit de clipsage s'étendant globalement perpendiculairement tant à l'âme 33 qu'aux ailes 32, 34 du corps 31 en U.

Ici, l'âme 33 du corps 31 en U comporte un retour de clipsage 35 à chacune de ses extrémités.

Les moyens de clipsage sont définis entre, d'une part, les bords latéraux 36, 37 des retours de clipsage 35 et, d'autre part, chacune des ailes 32, 34 du corps 31 en U ; plus précisément, les bords latéraux 36, 37 sont à distance des ailes 32, 34 globalement égale ou à peine supérieure au diamètre des fils de trame 12, 22 et la fonction clipsage est assurée par une proéminence 45, précédée d'une entrée en biseau, que présente au voisinage de leur extrémité lesdits bords latéraux 36, 37, ladite proéminence 45 définissant avec les ailes 32, 34 un passage dont la largeur est inférieure audit diamètre des fils de trame 12,22.

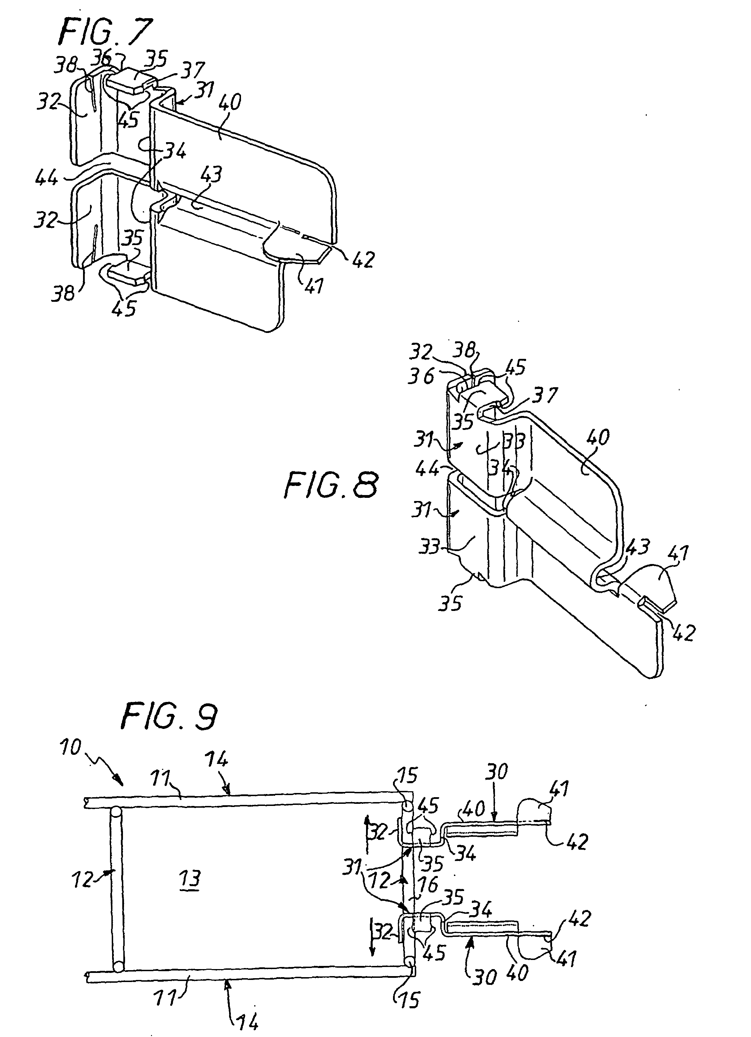

Ainsi, il est possible de clipser une éclisse 40 sur chaque aile 15 du fil de trame 12 en bout du chemin de câbles 10, de l'intérieur vers l'extérieur, comme montré sur les figures 9, 10 et 14 à 16.

Le clipsage des éclisses 30 sur chacune des ailes 15 du fil de trame 12 conduit à un montage à rotation desdites éclisses 30 autour desdites ailes 15.

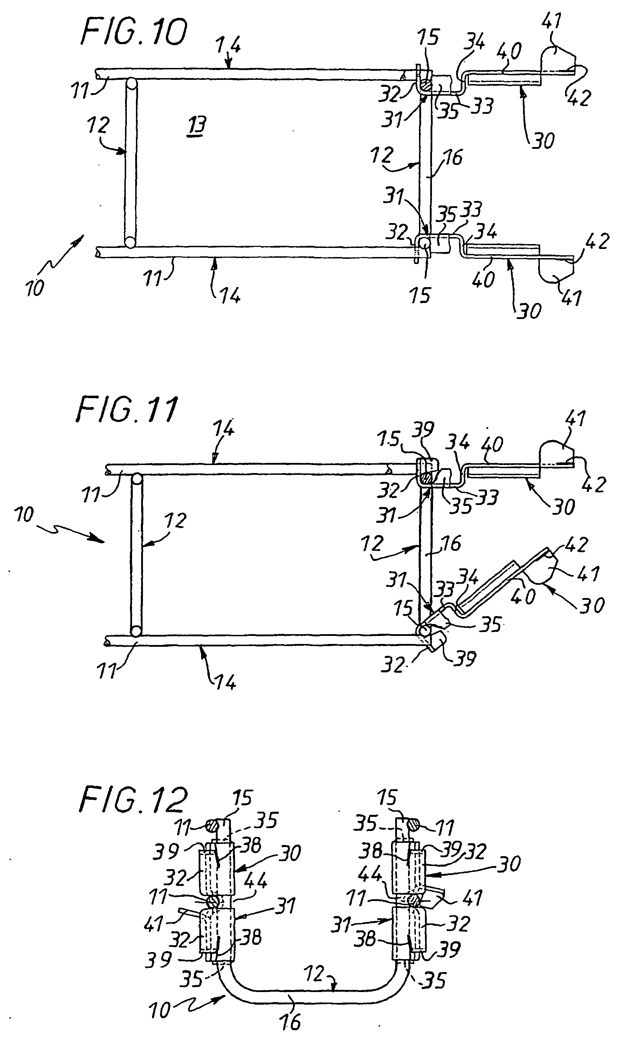

Pour conforter ce clipsage, l'aile 32 qui retient l'éclisse 30 présente une fente 38 définissant une languette 39 adaptée à être pliée sur l'aile 15 du fil de trame 12 jusqu'à se trouver pratiquement perpendiculaire à l'aile 32, figures 11 et 12 ; avantageusement, la fente 38 s'étend en biais en sorte de pouvoir être mise en oeuvre quel que soit le diamètre du fil de trame 12 ; sur la figure 11, les languettes 39 des deux éclisses 30 sont pliées ; sur la figure 12, les languettes 39 de l'éclisse 30 sont montrées pliées.

L'une des ailes du U du corps 31 en U, ici l'aile référencée 34, se prolonge selon un retour 40 dit de verrouillage ; dans la forme représentée sur les figures, ce retour de verrouillage 40 s'étend globalement parallèlement à l'âme 33 du U du corps 31 en U.

Le retour de verrouillage 40 porte une patte 41 dite de verrouillage au droit du bord d'une rainure 43 ménagée dans ledit retour de verrouillage 40.

Le retour de verrouillage 40 s'étend globalement parallèlement à l'âme 33 du U du corps 31 en U, et la rainure 43 s'étend parallèlement aux retours de clipsage 35, en étant pratiquement à mi-hauteur par rapport aux ailes 32, 34 du corps 31 en U, auxquelles elle est pratiquement perpendiculaire.

Dans la forme représentée, le retour de verrouillage 40 prolonge l'aile 34 du corps 31 en U selon toute la hauteur de celle-ci.

Le fond de la rainure 43 s'étend, par rapport au retour de verrouillage 40, du même côté que celui où s'étend l'âme 33 du corps 31 en U et la patte 41 de verrouillage s'étend du côté opposé ; grâce à cette disposition, la patte 41 de verrouillage peut être pliée sur un fil qui s'étend dans ladite rainure 43, en l'occurrence un fil de chaîne, pour verrouiller l'éclisse 30 par rapport audit fil en position de raccordement, comme expliqué ci-dessous.

Pour permettre le passage d'un tel fil, en l'occurrence un fil de chaîne, une entaille 44 ménagée dans l'âme 33 et les ailes 32 et 34 du corps 31 en U prolonge la rainure 43.

Les deux éclisses 30 étant montées à rotation autour des ailes 15 du fil de trame 12 en bout du chemin de câbles 10, figures 11 et 12, il suffit de les faire pivoter vers l'intérieur du chemin de câbles 10 en les faisant notamment s'étendre le long des panneaux latéraux 14, figure 13, pour les mettre en position de stockage, le chemin de câbles 10 pouvant être livré ainsi, éclisses pré-montées.

Pour raccorder le chemin de câbles 10 à un chemin de câbles identique, ici référencé 20, on déploie vers l'extérieur les éclisses 30, par rotation autour des ailes 15 du fil de trame 12 en bout et on rapproche le chemin de câbles 20 du chemin de câbles 10, les éclisses 30 étant introduites dans le chemin de câbles 20, figures 14 et 15.

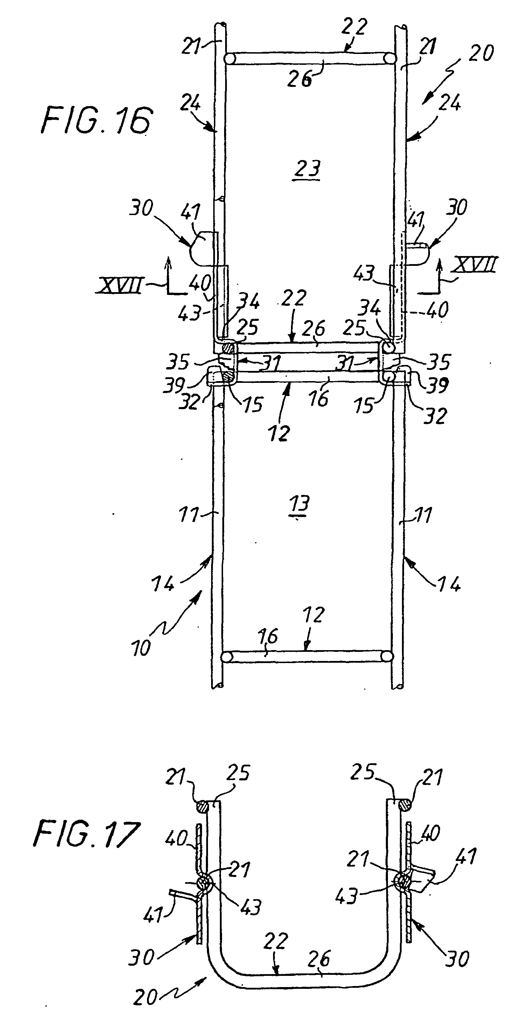

On continue à faire tourner les éclisses 30 vers l'extérieur jusqu'à ce que, d'une part, l'aile 34 et le retour de clipsage 35 viennent chevaucher jusqu'au clipsage l'aile 25 du fil de trame 22 du chemin de câbles 20, et, d'autre part, la rainure 43 vienne coiffer le fil de chaîne 24 de ce chemin de câbles 20, figures 16 et 17 ; dans cette position, la patte de verrouillage 41 s'étend vers l'extérieur du chemin de câbles 20 ; il suffit de plier cette patte pour verrouillez l'éclisse sur ce fil de chaîne 24 ; sur la figure 16, la patte de verrouillage 41 de l'éclisse 30 supérieure est montrée avant pliage et celle de l'éclisse 30 inférieure est montrée après pliage.

## Revendications

1. Eclisse de raccordement pour raccorder l'un à la suite de l'autre deux chemins de câbles (10,20) en fils constitués de fils de deux types différents, d'une part, des fils de chaîne et, d'autre part, des fils de trame, le raccordement desdits deux chemins de câbles (10,20) étant effectué par l'intermédiaire de leurs fils de trame (12,22) placés en bout, **caractérisée par le fait qu'**elle comporte des premiers moyens (32,35) de clipsage adaptés à clipser ladite éclisse (30) sur un premier fil de trame (12) et des seconds moyens de clipsage (34,35) adaptés à clipser ladite éclisse (30) sur un second fil de trame (22), les deux fils de trame (12,22) étant placés en bout, **par le fait que** les premiers moyens de clipsage (32,35) permettent le montage à rotation de l'éclisse (30) sur un chemin de câbles (10), et **par le fait que** les seconds moyens de clipsage (34,35) permettent l'assemblage des deux chemins de câbles (10,20), ladite éclisse (30) comportant également des moyens de verrouillage adaptés à coopérer avec un fil de chaîne de l'autre des chemins de câbles (20) et à verrouiller ladite éclisse (30) dans sa position de raccordement.

2. Eclisse de raccordement selon la revendication 1, **caractérisée par le fait qu'**elle comprend un corps (31) en forme de U ayant deux ailes (32,34) et une âme (33), les moyens de clipsage étant définis entre, d'une part, les bords latéraux (36,37) d'un retour (35) dit de clipsage prolongeant l'âme (33) en s'étendant globalement perpendiculairement à celle-ci et, d'autre part, chacune desdites ailes (32,34).

3. Eclisse de raccordement selon la revendication 2, **caractérisée par le fait que** l'âme (33) du corps en U (31) comporte un retour de clipsage (35) à chacune de ses extrémités.

4. Eclisse de raccordement selon l'une des revendications 2 ou 3, **caractérisée par le fait que** l'une (32) des ailes du corps en U (31) présente à son extrémité proche d'un retour de clipsage (35) une fente (38) définissant une languette (39) destinée à être par pliage rabattue vers l'intérieur du U du corps en U (31).

5. Eclisse de raccordement selon l'une des revendications 2 à 4, **caractérisée par le fait que** l'une (34) des ailes du U du corps en U (31) se prolonge selon un retour (40) dit de verrouillage portant une patte (41) dite de verrouillage adaptée à être pliée sur un fil de chaîne (21) pour verrouiller l'éclisse (30) en position de raccordement.

6. Eclisse de raccordement selon la revendication 5, **caractérisée par le fait que** la patte de verrouillage (41) est portée par le retour de verrouillage (40) au droit du bord d'une rainure (43) ménagée dans ledit retour de verrouillage (40).

7. Eclisse de raccordement selon l'une des revendications 5 ou 6, **caractérisée par le fait que** le retour de verrouillage (40) s'étend globalement parallèlement à l'âme (33) du U du corps en U (31).

8. Eclisse de raccordement selon la revendication 6, **caractérisée par le fait que** la rainure (43) s'étend parallèlement au retour de clipsage (35).

9. Eclisse de raccordement selon la revendication 6, **caractérisée par le fait qu'**elle présente une entaille (44) ménagée dans l'âme (33) et les ailes (32,34) du corps en U (31) en prolongement de la rainure (43).

10. Eclisse de raccordement selon l'une des revendications 1 à 9, **caractérisé par le fait que** lesdits bords latéraux (36,37) du retour (35) présentent, au voisinage de leur extrémité, une proéminence (45) précédée d'une entrée en biseau, ladite proéminence (45) définissant avec les ailes (32,34) du corps (31) en forme de U un passage dont la largeur est inférieure au diamètre des fils de trame (12,22).

11. Ensemble de deux chemins de câbles en fils raccordés par au moins une éclisse de raccordement selon l'une des revendications 1 à 10.

12. Ensemble selon la revendication 11, dans lequel l'éclisse présente les caractéristiques des revendications 3, 4 et 6 à 10 prises conjointement, **caractérisé par le fait que** l'éclisse (30) est clipsée de part et d'autre des retours de clipsage (35) par les ailes (15, 25) des fils de trame (12, 22) placés en bout, et se faisant face, des deux chemins de câbles (10,20), les languettes (39) étant rabattues sur lesdites ailes (15, 25), un fil de chaîne (21) de l'un (20) desdits chemins de câbles s'étendant dans la rainure (43) et dans l'entaille (44), la patte de verrouillage (41) étant rabattue sur ledit fil de chaîne (21).

13. Chemin de câbles en fils, **caractérisé par le fait qu'**il est équipé d'au moins une éclisse de raccordement selon l'une des revendications 1 à 10, ladite éclisse (30) étant montée à pivotement autour d'une aile (15) d'un fil de trame (12) en bout et s'étendant à l'intérieur du chemin de câbles (10) le long de son panneau latéral (14) défini notamment par ladite aile (15).

## Patentansprüche

1. Verbindungsschiene um zwei Draht-Kabelwannen (10, 20) hintereinander zu verbinden, die aus zwei unterschiedlichen Drahttypen bestehen, zum einen aus Längsdrähten und zum anderen aus Querdrähten, wobei die Verbindung der beiden Kabelwannen (10, 20) über ihre am Ende angeordneten Querdrähte (12, 22) erfolgt, **dadurch gekennzeichnet, dass** sie erste Einschnappmittel (32, 35), die ausgebildet sind, um die Schiene (30) auf einem ersten Querdraht (12) einschnappen zu lassen und zweite Einschnappmittel (34, 35) aufweist, die ausgebildet sind, um die Schiene (30) auf einem zweiten Querdraht (22) einschnappen zu lassen, wobei die beiden Querdrähte (12, 22) am Ende angeordnet sind, dass die ersten Einschnappmittel (32, 35) die drehbare Anbringung der Schiene (30) auf einer Kabelwanne (10) ermöglichen, und dass die zweiten Einschnappmittel (34, 35) den Zusammenbau der beiden Kabelwannen (10, 20) ermöglichen, wobei die Schiene (30) auch Verriegelungsmittel aufweist, die ausgebildet sind, um mit einem Längsdraht der anderen Kabelwanne (20) zusammenzuwirken und um die Schiene (30) in ihrer Verbindungsstellung zu verriegeln.

2. Verbindungsschiene nach Anspruch 1, **dadurch gekennzeichnet, dass** sie einen U-förmigen Körper (31) mit zwei Schenkeln (32, 34) und einem Steg (33) aufweist, wobei die Einschnappmittel zwischen einerseits den Seitenrändern (36, 37) eines so genannten Einschnappumschlags (35), der den Steg (33) verlängert, indem er sich insgesamt senkrecht zu diesem erstreckt, und andererseits jedem der Schenkel (32, 34) definiert sind.

3. Verbindungsschiene nach Anspruch 2, **dadurch gekennzeichnet, dass** der Steg (33) des U-förmigen Körpers (31) an jedem seiner Enden einen Einschnappumschlag (35) aufweist.

4. Verbindungsschiene nach einem der Ansprüche 2 oder 3, **dadurch gekennzeichnet, dass** einer der Schenkel (32) des U-förmigen Körpers (31) an seinem, einem Einschnappumschlag (35) nahe liegendem Ende einen Schlitz (38) aufweist, der eine Zunge (39) definiert, die ausgebildet ist, um durch Falten ins Innere des U des U-förmigen Körpers (31) geflanscht zu werden.

5. Verbindungsschiene nach einem der Ansprüche 2 bis 4, d a-durch **gekennzeichnet**, dass sich einer der Schenkel (34) des U des U-förmigen Körpers (31) sich in einem so genannten Verriegelungsumschlag (40) verlängert, der eine so genannte Verriegelungslasche (41) trägt, die ausgebildet ist, um sich auf einen Längsdraht (21) umzubiegen, um die Schiene (30) in der Verbindungsstellung zu verriegeln.

6. Verbindungsschiene nach Anspruch 5, **dadurch gekennzeichnet, dass** die Verriegelungslasche (41) vom Verriegelungsumschlag (40) rechtwinkelig zum Rand einer im Verriegelungsumschlag (40) ausgebildeten Rille (43) getragen wird.

7. Verbindungsschiene nach einem der Ansprüche 5 oder 6, d a-durch **gekennzeichnet**, dass der Verriegelungsumschlag (40) insgesamt parallel zum Steg (33) des U des U-förmigen Körpers (31) verläuft.

8. Verbindungsschiene nach Anspruch 6, **dadurch gekennzeichnet, dass** die Rille (43) parallel zum Einschnappumschlag (35) verläuft.

9. Verbindungsschiene nach Anspruch 6, **dadurch gekennzeichnet, dass** sie einen im Steg (33) und in den Schenkeln (32, 34) des U-förmigen Körpers (31) ausgebildeten Einschnitt (44) in-Verlängerung der Rille (43) aufweist.

10. Verbindungsschiene nach einem der Ansprüche 1 bis 9, **dadurch gekennzeichnet, dass** die Seitenränder (36, 37) des Umschlags (35) in der Nähe ihres Endes einen Vorsprung (45) bilden, vor dem ein abgeschrägter Eingang liegt, wobei der Vorsprung (45) mit den Schenkeln (32, 34) des U-förmigen Körpers (31) einen Durchgang definiert, dessen Breite geringer als der Durchmesser der Querdrähte (12, 22) ist.

11. Einheit von zwei Draht-Kabelwannen, die von mindestens einer Verbindungsschiene nach einem der Ansprüche 1 bis 10 verbunden werden.

12. Einheit nach Anspruch 11, bei der die Schiene die Merkmale der Ansprüche 3, 4 und 6 bis 10 zusammen gesehen aufweist, **dadurch gekennzeichnet, dass** die Schiene (30) auf beiden Seiten der Einschnappumschläge (35) von den Schenkeln (15, 25) der am Ende angeordneten und einander gegenüberliegenden Querdrähte (12, 22), der beiden Kabelwannen (10, 20) eingeschnappt ist, wobei die Zungen (39) auf die Schenkel (15, 25) umgeschlagen sind, wobei ein Längsdraht (21) einer der Kabelwannen (20) in der Rille (43) und im Einschnitt (44) verläuft, wobei die Verriegelungslasche (41) auf den Längsdraht (21) umgeschlagen ist.

13. Draht-Kabelwanne, **dadurch gekennzeichnet, dass** sie mit mindestens einer Verbindungsschiene nach einem der Ansprüche 1 bis 10 versehen ist, wobei die Schiene (30) um einen Schenkel (15) eines am Ende angeordneten Querdrahts (12) schwenkbar angebracht ist und im Inneren der Kabelwanne (10), entlang ihrer Seitenplatte (14) verläuft, die insbesondere durch den Schenkel (15) definiert wird.

## Claims

1. A connecting butt strap for butt jointing two wire cable trays (10, 20) which are constituted by wires of two different types, namely warp wires and weft wires, said cable trays (10, 20) being connected by means of their end weft wires (12, 22), **characterized by** the fact that it comprises first clipping means (32, 35) adapted to clip said butt strap (30) to a first weft wire (12) and second clipping means (34, 35) adapted to clip said butt strap (30) to a second weft wire (22), the two weft wires (12, 22) being end weft wires, by the fact that the first clipping means (32, 35) enable the butt strap (30) to be rotatably mounted on a cable tray (10), and by the fact that the second clipping means (34, 35) enable the assembly of the two cable trays (10, 20), said butt strap (30) further comprising locking means adapted to cooperate with a warp wire of the other cable tray (20) and to lock said butt strap (30) in its connecting position.

2. A connecting butt strap according to claim 1, **characterized by** the fact that it comprises a U-shaped body (31) having two flanges (32, 34) and a web (33), the clipping means being defined between the lateral edges (36, 37) of a clipping rim (35) extending the web (33) and lying generally perpendicular thereto, and each of said flanges (32, 34).

3. A connecting butt strap according to claim 2, **characterized by** the fact that the web (33) of the U-shaped body (31) comprises a clipping rim (35) at each end.

4. A connecting butt strap according to one of claims 2 or 3, **characterized by** the fact that one flange (32) of the U-shaped body (31) has at its end near a clipping rim (35) a slot (38) defining a tongue (39) adapted to be bent toward the interior of the U-shape of the U-shaped body (31).

5. A connecting butt strap according to one of claims 2 to 4, **characterized by** the fact that one flange (34) of the U-shape of the U-shaped body (31) is extended by a locking rim (40) carrying a locking lug (41) adapted to be bent over a warp wire (21) to lock the butt strap (30) in connecting position.

6. A connecting butt strap according to claim 5, **characterized by** the fact that the locking lug (41) is carried by the locking rim (40) in line with the edge of a groove (43) provided in said locking rim (40).

7. A connecting butt strap according to one of claims 5 or 6, **characterized by** the fact that the locking rim (40) is generally parallel to the web (33) of the U-shape of the U-shaped body (31).

8. A connecting butt strap according to claim 6, **characterized by** the fact that the groove (43) is parallel to the clipping rim (35).

9. A connecting butt strap according to claim 6, **characterized by** the fact that it comprises a notch (44) provided in the web (33) and the flanges (32, 34) of the U-shape body (31) and extending the groove (43).

10. A connecting butt strap according to one of claims 1 to 9, **characterized by** the fact that said lateral edges (36, 37) of the rim (35) have, in the vicinity of their end, a protuberance (45) preceded by an inward bevel, said protuberance (45) defining with the flanges (32, 34) of the U-shaped body (31) a passage whose width is less than the diameter of the weft wires (12, 22).

11. An assembly of two wire cable trays connected by at least one connecting butt strap according to one of claims 1 to 10.

12. An assembly according to claim 11, in which the butt strap has the features of claims 3, 4 and 6 to 10 in combination, **characterized by** the fact that the butt strap (30) is clipped on both sides of the clipping rims (35) by the facing wings (15, 25) of the end weft wires (12, 22) of the two cable trays (10, 20), the tongues (39) being bent over said wings (15, 25), a warp wire (21) of one said cable tray (20) lying in the groove (43) and in the notch (44), and the locking lug (41) being bent over said warp wire (21).

13. A wire cable tray **characterized by** the fact that it is equipped with at least one connecting butt strap according to any one of claims 1 to 10, said butt strap (30) being pivotally mounted about a wing (15) of an end weft wire (12) and lying inside the cable tray (10) along its lateral panel (14) defined in particular by said wing (15).
